(19) Europäisches Patentamt
European Patent Office
Office européen des brevets

(11) **EP 4 413 609 B1**

(12) **EUROPÄISCHE PATENTSCHRIFT**

(45) Veröffentlichungstag und Bekanntmachung des Hinweises auf die Patenterteilung:
**10.09.2025 Patentblatt 2025/37**

(21) Anmeldenummer: **22798324.4**

(22) Anmeldetag: **04.10.2022**

(51) Internationale Patentklassifikation (IPC):
***H01J 49/04*** *(2006.01)*

(52) Gemeinsame Patentklassifikation (CPC):
**H01J 49/0004; H01J 49/009; H01J 49/0463;**
G01N 2001/045; G01N 2001/2886

(86) Internationale Anmeldenummer:
**PCT/EP2022/077583**

(87) Internationale Veröffentlichungsnummer:
**WO 2023/057449 (13.04.2023 Gazette 2023/15)**

(54) **VORRICHTUNG ZUR AUFNAHME EINES FESTSTOFF-PROBENMATERIALS UND SYSTEM UND VERFAHREN MIT DIESER**

APPARATUS FOR ACCOMMODATING A SOLID SAMPLE MATERIAL AND SYSTEM AND METHOD WITH THE SAME

DISPOSITIF DE RÉCEPTION D'UN ÉCHANTILLON DE MATÉRIAU SOLIDE, SYSTÈME ET PROCÉDÉ AVEC CE DISPOSITF

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **05.10.2021 AT 507912021**

(43) Veröffentlichungstag der Anmeldung:
**14.08.2024 Patentblatt 2024/33**

(73) Patentinhaber: **TECHNISCHE UNIVERSITÄT WIEN**
**1040 Wien (AT)**

(72) Erfinder:
• **LIMBECK, Andreas**
**1220 Wien (AT)**
• **ROSENBERG, Egon Erwin**
**1020 Wien (AT)**
• **JOHANNES, Frank**
**3400 Klosterneuburg (AT)**
• **KRONLACHNER, Laura**
**1020 Wien (AT)**

(74) Vertreter: **Puchberger & Partner Patentanwälte**
**Reichsratsstraße 13**
**1010 Wien (AT)**

(56) Entgegenhaltungen:
WO-A2-2014/114803      DE-U1- 202004 005 991
US-A- 5 308 979      US-A1- 2013 162 991

**Beschreibung**

Die vorliegende Erfindung betrifft eine Vorrichtung zur Aufnahme sowie zur orts- und tiefenaufgelösten Analyse eines Feststoff-Probenmaterials und ein System, das eine derartige Vorrichtung, eine Laservorrichtung sowie gegebenenfalls eine massenspektrometrische Vorrichtung umfasst. Die Erfindung betrifft ferner ein Verfahren zur Analyse eines Feststoff-Probenmaterials unter Verwendung einer erfindungsgemäßen Vorrichtung.

Der zunehmende Einsatz von Materialien oder Beschichtungen auf der Basis von organischen Verbindungen in der Industrie (z.B. polymere Werkstoffe oder Farben und Lacke) aber auch in vielen Bereichen des Alltags (z.B. Folien und Verpackungsmaterialien) erfordert eine zuverlässige Charakterisierung der verwendeten Stoffe. Für Fragestellungen beispielsweise aus den Bereichen Kunststoffverarbeitung, Schadensanalyse oder Kunststoffrecycling usw. sind insbesondere Informationen über die chemische Zusammensetzung von Feststoff-Probenmaterialien notwendig.

Etablierte und wohlbekannte Standard-Verfahren der organischen Analyse wie zum Beispiel Flüssigkeitschromatographie oder Gaschromatographie gekoppelt mit massenspektrometrischer Detektion ermöglichen zwar einen Zugang zu diesen Informationen, deren Anwendung ist jedoch mit wesentlichen Nachteilen verbunden. Das Feststoff-Probenmaterial muss vor der eigentlichen Analyse vorbereitet, d.h. insbesondere in Lösung oder in Form einer flüchtigen bzw. gasförmigen Verbindung gebracht, werden. Dies bedeutet zusätzliche Arbeitsschritte, die nicht nur zeitaufwändig sind, sondern auch mögliche Fehlerquellen darstellen. Zusätzlich geht bei der Probenvorbereitung die Information über die exakte Lokalisierung von Analyten verloren, sodass üblicherweise nur Information über die durchschnittliche Zusammensetzung des Probenmaterials gewonnen werden kann. Eine ortsaufgelöste Analyse wäre jedoch für viele Fragestellungen nutzbringend.

Um die mit der Probenvorbereitung verbundenen Nachteile zu umgehen, sind Verfahren bekannt, die eine direkte Analyse von organischem Material in Feststoffproben erlauben. Beispiele hierfür sind Infrarot-Spektroskopie und unterschiedliche Laser-basierte Verfahren der organischen Massenspektrometrie. Im Vergleich zu den eingangs beschriebenen klassischen Ansätzen benötigen diese Verfahren keine aufwändige Probenvorbereitung, sodass in der Regel ein deutlich höherer Probendurchsatz möglich ist.

Auch die letztgenannten Verfahren zur direkten Analyse von Feststoff-Probenmaterial sind jedoch insbesondere in Hinblick auf die zugänglichen Analyten, die Ortsauflösung und die Möglichkeit, auch tiefenaufgelöste Analysen durchzuführen, oft unzureichend. Insbesondere die Ermöglichung tiefenaufgelöster Analytik ist jedoch ein wichtiger Aspekt, da die analytische Charakterisierung von Probenmaterialien mit Schichtstrukturen in den letzten Jahren massiv an Bedeutung gewonnen hat.

Im Gegensatz zur Analytik von organischen Verbindungen werden im Bereich der Elementanalytik für die Untersuchung von Tiefenprofilen bereits unterschiedliche Analysenmethoden verwendet. Als Beispiele hierfür können Glimmentladungs-Massenspektrometrie (GD-MS), Sekundärionen-Massenspektrometrie (SIMS) oder Laser-basierte Verfahren wie *Laser Induced* Breakdown-Spektroskopie (LIBS) oder Laser-Ablation in Verbindung mit induktiv-gekoppelter Plasma-Massenspektrometrie (LA-ICP-MS) genannt werden. Derartige Verfahren erlauben jedoch keinen Erhalt von verbindungsspezifischen Informationen.

Die Laser-basierte Analytik ist aufgrund ihres destruktiven Charakters gut für die orts- und tiefenaufgelöste Analytik mit erzielbaren Auflösungen im $\mu$m-Bereich geeignet. Mittels Laser-Material-Interaktion wird der Abtrag von Feststoff-Probenmaterial erreicht, welches dann mithilfe eines Fluidstromes in Form feinster Partikel zur Analyseeinrichtung transportiert wird. Die Orts- und Tiefenauflösung ist unter anderem von der verwendeten Laservorrichtung abhängig, maßgeblich sind jedoch auch das Verhalten und der Transport des abgetragenen Feststoff-Probenmaterials.

Diesbezüglich ist die Fließgeschwindigkeit des Fluidstromes von großer Bedeutung, der beispielsweise im Fall von LA-ICP-MS meist im Bereich von wenigen Litern pro Minute liegt. Die für die Elementanalytik verwendeten massenspektrometrischen Vorrichtungen sind mit derart hohen Fließgeschwindigkeiten kompatibel. Würde ein solches System mit einer massenspektrometrischen Vorrichtung für die organische und Molekülanalytik gekoppelt werden, wäre der hohe Fluiddurchsatz für eine Analyse mit ausreichender Sensitivität nicht geeignet; die Fließgeschwindigkeit müsste verringert werden, was jedoch das Auswaschverhalten des abgetragenen Feststoff-Probenmaterials verschlechtern und dadurch die Orts- und Tiefenauflösung verringern würde, wodurch sich ein Zielkonflikt ergibt.

Aus WO2014/114803 A2 ist eine Vorrichtung gemäß dem Oberbegriff des Anspruchs 1 bekannt.

Weiterer Stand der Technik ist aus US2013/0162991A1, DE 20 2004 005 991 U1 sowie US 5,308, 979 bekannt.

Es ist daher eine Aufgabe der vorliegenden Erfindung, den oben beschriebenen Zielkonflikt zu lösen und eine Vorrichtung zu schaffen, die für die direkte orts- und tiefenaufgelöste Analyse von Feststoff-Probenmaterial verwendet werden kann, und die den Erhalt von Molekülinformationen bzw. die Verwendung mit einer für die organische und Molekülanalytik geeigneten massenspektrometrischen Vorrichtung erlaubt.

Insbesondere soll die erfindungsgemäße Vorrichtung daher dazu geeignet sein, mit einer massenspektrometrischen Vorrichtung mit Elektronenstoßionisation unter Vakuumbedingungen verwendet werden zu können, da mit einem derartigen massenspektrometrischen Ansatz besonders wertvolle Molekülinformationen erhalten werden können. Die erfindungsgemäße Vorrichtung kann jedoch mit einer anderen geeigneten Form der Ionisation verwendet werden.

Diese und weitere Aufgaben werden durch eine Vorrichtung mit den Merkmalen des unabhängigen Patentanspruchs gelöst.

Die vorliegende Erfindung betrifft eine Vorrichtung zur Aufnahme und Analyse eines Feststoff-Probenmaterials, insbesondere für laserbasierte chemische Analyse, umfassend ein im Wesentlichen gasdicht abgeschlossenes Gehäuse mit einem innerhalb des Gehäuses angeordneten Probenaufnahmebereich, wobei das Gehäuse ein für einen Laserstrahl durchlässiges Fenster umfasst, wobei die Vorrichtung eine Einlasseinrichtung zum Einleiten eines Fluidstroms zum Probenaufnahmebereich sowie eine erste Auslasseinrichtung und eine zweite Auslasseinrichtung zum Ableiten des mit abgetragenem Probenmaterial beaufschlagten Fluidstroms vom Probenaufnahmebereich aufweist.

Erfindungsgemäß sind die Auslasseinrichtungen derart ausgebildet, dass die austretenden Volumenströme des Fluidstroms in einem Verhältnis zwischen 100:1 und 5000:1, insbesondere zwischen 500:1 und 2000:1, zwischen erster Auslasseinrichtung und zweiter Auslasseinrichtung stehen.

Es wurde im Rahmen der vorliegenden Erfindung festgestellt, dass es eine Verwendung von zwei Auslasseinrichtungen und die Teilung des Fluidstroms erlauben, hohe Volumenströme durch den Probenaufnahmebereich zu leiten und dennoch eine Analyse des mit dem Laserstrahl abgetragenen Feststoff-Probenmaterial in einer massenspektrometrischen Einrichtung für die organische Analyse zu ermöglichen. Einerseits kann durch die einlassseitig hohen Volumenströme ein gutes Auswaschverhalten von abgetragenem Feststoff-Probenmaterial aus dem Probenaufnahmebereich erreicht werden, andererseits kann der aus der zweiten Auslasseinrichtung austretende mit Probenmaterial beaufschlagte Fluidstrom in einer massenspektrometrischen Vorrichtung analysiert werden, die nur für die Einführung geringer Volumenströme geeignet ist.

Der Fluidstrom ist in einer spezifischen Ausführungsform ein Gasstrom, bevorzugt ein Heliumstrom. Je nach Einsatzzweck können jedoch auch andere Gase oder Mischungen aus zwei oder mehreren Gasen eingesetzt werden. Auch der Einsatz einer Flüssigkeit ist möglich.

Gegebenenfalls ist vorgesehen, dass die Einlasseinrichtung dazu eingerichtet ist, einen Fluidstrom, insbesondere ein Gas, vorzugsweise Helium, mit einer Flussrate zwischen 0,5 L/min und 5 L/min, insbesondere zwischen 0,5 L/min und 2 L/min, in den Probenaufnahmebereich einzuleiten. Gegebenenfalls liegen diese Flussraten bei einem Druck zwischen 0,5 bar und 2 bar vor. Bevorzugte Flussraten liegen zwischen 0,8 L/min und 2,0 L/min, insbesondere zwischen 1,2 L/min und 1,8 L/min. Diese Fluidparameter ermöglichen ein besonders gutes Auswaschverhalten. Insbesondere kann dabei der Probenaufnahmebereich ein Innenvolumen von kleiner gleich 5 cm$^3$, insbesondere kleiner gleich 2 cm$^2$, bevorzugt kleiner gleich 1 cm$^3$, aufweisen.

Gegebenenfalls ist vorgesehen, dass das Gehäuse eine Einlassöffnung aufweist, mit der die Einlasseinrichtung verbunden ist, dass das Gehäuse eine erste Auslassöffnung aufweist, mit der die erste Auslasseinrichtung verbunden ist, und dass das Gehäuse eine zweite Auslassöffnung aufweist, mit der die zweite Auslasseinrichtung verbunden ist. Durch die Anordnung von Einlass- und Auslassöffnungen im Gehäuse wird eine besonders effiziente Teilung des Fluidstroms ermöglicht.

Gegebenenfalls ist vorgesehen, dass zwischen Einlassöffnung und erster Auslassöffnung eine Hauptströmungsrichtung des Fluidstroms verläuft, und dass die zweite Auslassöffnung in einem Winkel $\alpha$ zwischen 10° und 90°, insbesondere zwischen 30° und 60°, in Bezug auf die Hauptströmungsrichtung angeordnet ist. Insbesondere kann die erste Auslassöffnung der Einlassöffnung genau gegenüberliegend angeordnet sein. Der Hauptteil des Fluidstroms durchströmt dann den Probenaufnahmebereich in im Wesentlichen linearer Weise und der kleinere Volumenstrom, der zur zweiten Auslassöffnung abgeleitet wird, strömt im Winkel $\alpha$ von der Hauptströmungsrichtung weg.

Gegebenenfalls ist vorgesehen, dass der Probenaufnahmebereich kreisförmig oder tropfenförmig ausgebildet ist. Dies ermöglicht ein gutes Auswaschverhalten, das über den gesamten Probenaufnahmebereich ähnlich ist.

Gegebenenfalls ist vorgesehen, dass die erste Auslasseinrichtung eine Länge $L_1$ und einem Strömungsquerschnitt $Q_1$ aufweist, und dass die zweite Auslasseinrichtung eine Länge $L_2$ und einen Strömungsquerschnitt $Q_2$ aufweist. Gegebenenfalls umfassen die Auslasseinrichtungen jeweils Auslassschläuche mit der genannten Länge und dem genannten Strömungsquerschnitt.

Die Längen der Auslasseinrichtungen verlaufen insbesondere von der jeweiligen Auslassöffnung im Gehäuse bis zu einem Auslassende der Auslasseinrichtung. Insbesondere das Ende der zweiten Auslasseinrichtung kann mit einer massenspektrometrischen Vorrichtung verbindbar sein. Gegebenenfalls kann das Ende der ersten Auslasseinrichtung ebenfalls mit einer Analysenvorrichtung, insbesondere mit einer massenspektrometrischen Vorrichtung oder mit einer emissionsspektroskopischen Einrichtung verbindbar sein.

Die Längen $L_1$ und $L_2$ bezeichnen somit insbesondere jene Distanz, die ein Fluidstrom in der jeweiligen Auslasseinrichtung durchströmen kann oder durchströmt. Ist der Strömungsquerschnitt nicht über die gesamte Länge der Auslasseinrichtung konstant, können die genannten Strömungsquerschnitte jeweils den geringsten Strömungsquerschnitt entlang des Verlaufs einer Auslasseinrichtung bezeichnen.

Gegebenenfalls ist der aus der zweiten Auslasseinrichtung austretende Volumenstrom ($V_2$) von der Länge ($L_2$) und der Querschnittsfläche ($Q_2$) der zweiten Auslasseinrichtung definiert. Insbesondere bestimmt sich dadurch auch das Teilungsverhältnis des gesamten über die Einlasseinrichtung zugeführten Volumenstroms ($V_0$).

Dieser Volumenstrom kann durch das Hagen-Poisseuille'sche Gesetz beschrieben werden, welches gemäß Gleichung 1 lautet:

$$\text{Gleichung 1:} \qquad V_2 = \frac{\pi\, r^4 \Delta p}{8\, \eta\, l}$$

Darin sind: $V_2$... aus der zweiten Auslasseinrichtung austretende Volumenstrom; $r$... Radius der zweiten Auslasseinrichtung; $\Delta p$...Druckabfall über die zweite Auslasseinrichtung (= Anfangsdruck minus Enddruck); $\eta$...dynamische Viskosität des Fluids; $\ell$...Länge der zweiten Auslasseinrichtung.

Das Teilungsverhältnis $V_1/V_2$ des über die Einlasseinrichtung zugeführten Gasstroms ergibt sich aus den beiden Volumsströmen $V_1$ und $V_2$ gemäß Gleichung 2:

$$\text{Gleichung 2:} \qquad V_1 = V_0 - V_2$$

Insbesondere unter der Annahme eines ausreichend groß dimensionierten Auslasses für den Volumenstrom $V_1$ bestimmen Länge und Strömungsquerschnitt der zweiten Auslasseinrichtung den Druckabfall auf dieser Seite. Hierdurch kann das Verhältnis der aus beiden Auslasseinrichtungen austretenden Teilvolumenströmen bestimmt werden.

Gegebenenfalls ist daher vorgesehen, dass die erste Auslasseinrichtung im Wesentlichen keinen Druckabfall aufweist, insbesondere für Volumenströme von kleiner als 2 L/min, wobei das Fluid bevorzugt ein Gas, besonders bevorzugt Helium, ist. "Im Wesentlichen kein Druckabfall" bedeutet insbesondere, dass der Enddruck weniger als 1% unter dem Anfangsdruck liegt.

Bevorzugt ist vorgesehen, dass das Gehäuse neben der ersten Auslassöffnung und der zweiten Auslassöffnung keine weitere Auslassöffnung aufweist, aus welcher das Fluid austreten kann. Das Gehäuse kann daher abgesehen von der Einlassöffnung und den beiden Auslassöffnungen im Wesentlichen fluiddicht, insbesondere gasdicht, ausgebildet sein.

Gegebenenfalls ist vorgesehen, dass der Strömungsquerschnitt $Q_2$ zwischen 0,003 und 0,12 mm$^2$ beträgt.

Gegebenenfalls ist vorgesehen, dass die Einlasseinrichtung einen Einlassschlauch umfasst.

Gegebenenfalls ist vorgesehen, dass das Gehäuse auf einer Bewegungseinrichtung angeordnet ist, die dazu eingerichtet ist, das Gehäuse translatorisch, insbesondere in drei zueinander im Wesentlichen orthogonal angeordnete Richtungen, zu verfahren. Dadurch kann die Position des Feststoff-Probenmaterials in Bezug auf den Laserstrahl verändert werden, um einen Abtrag an unterschiedlichen Stellen des Probenmaterials zu ermöglichen.

Gegebenenfalls ist vorgesehen, dass die zweite Auslasseinrichtung eine Heizeinrichtung umfasst, die dazu eingerichtet ist, die zweite Auslasseinrichtung zumindest abschnittsweise zu erhitzen. Insbesondere kann die Heizeinrichtung auch dazu eingerichtet sein, in der zweiten Auslasseinrichtung befindliches Fluid sowie gegebenenfalls darin enthaltenes abgetragenes Probenmaterial zu erhitzen. Dadurch kann das Risiko einer Kondensation von abgetragenem Probenmaterial im Inneren der zweiten Auslasseinrichtung reduziert werden. Es wurde festgestellt, dass durch Verwendung der Heizeinrichtung das Auswaschverhalten der Vorrichtung und damit auch die Peakform der massenspektrometrischen Signale verbessert werden können.

Gegebenenfalls ist vorgesehen, dass die Heizeinrichtung dazu eingerichtet ist, die zweite Auslasseinrichtung zumindest abschnittsweise auf eine Temperatur von wenigstens 70°C, insbesondere wenigstens 100°C, zu erhitzen.

Die Heizeinrichtung kann beispielsweise als Heizmantel ausgebildet sein, der die zweite Auslasseinrichtung zumindest teilweise umgibt.

Die Erfindung betrifft ferner ein System, das eine erfindungsgemäße Vorrichtung umfasst, sowie eine Laservorrichtung, wobei die Laservorrichtung dazu eingerichtet ist, einen Laserstrahl auf ein im Probenaufnahmebereich angeordnetes Feststoff-Probenmaterial abzugeben.

Gegebenenfalls ist vorgesehen, dass das Fenster für die Wellenlänge des Laserstrahls einen Transmissionsgrad von zumindest 80%, bevorzugt zumindest 90%, aufweist. Insbesondere kann das Fenster Quarzglas oder transparenten Korund, etwa Saphirglas, umfassen oder daraus bestehen.

Gegebenenfalls ist vorgesehen, dass die Laservorrichtung dazu eingerichtet ist, einen gepulsten monochromatischen Laserstrahl mit einer Wellenlänge von weniger als 300 nm abzugeben, und/oder dass die Laservorrichtung dazu eingerichtet ist, einen fokussierten Laserstrahl mit einem minimalen Strahldurchmesser von kleiner als 500 $\mu$m, insbesondere von kleiner als 200 $\mu$m, abzugeben. Die Laservorrichtung kann insbesondere dazu eingerichtet sein, einen Laserstrahl mit einer Wellenlänge von etwa 248 nm, 224 nm, 213 nm oder 193 nm auszusenden. Die Laservorrichtung kann einen Feststoff-Laser oder einen Gasphasen-Laser umfassen.

Gegebenenfalls ist vorgesehen, dass das System ferner eine massenspektrometrische Vorrichtung umfasst, wobei die massenspektrometrische Vorrichtung dazu eingerichtet ist, mittels des Laserstrahls abgetragenes Probenmaterial im Fluidstrom durch Elektronenstoßionisation in einem Vakuum zu ionisieren, wobei die massenspektrometrische Vorrichtung zur Aufnahme des Fluidstroms mit der zweiten Auslasseinrichtung verbunden oder mit dieser verbindbar ist. Gegebenenfalls kann die massenspektrometrische Vorrichtung alternativ oder zusätzlich dazu eingerichtet sein, mittels des Laserstrahls abgetragenes Probenmaterial im Fluidstrom durch eine andere geeignete Form der Ionisation in einem Vakuum zu ionisieren.

Gegebenenfalls ist das Auslassende der zweiten Auslasseinrichtung mit einer Probeneinführöffnung der massenspektrometrischen Vorrichtung verbunden oder mit diesem verbindbar.

Gegebenenfalls weist die massenspektrometrische Vorrichtung eine Ionenquelle auf, die für die Ionisierung des Probenmaterials eingerichtet ist, wobei die Ionenquelle eine Elektrodenanordnung zur Ausbildung eines elektrischen Feldes aufweist. Gegebenenfalls weist die Elektrodenanordnung eine Kathode und eine Anode auf und die Potentialdifferenz ist in einem Bereich zwischen 10 V und 100 V einstellbar. Gegebenenfalls weist die Ionenquelle eine Heizeinrichtung auf, die insbesondere dazu eingerichtet ist, eine Temperatur zwischen 100°C und 300°C in der Ionenquelle bereitzustellen. Gegebenenfalls ist in der massenspektrometrischen Vorrichtung eine Pumpeinrichtung vorgesehen, die dazu eingerichtet ist, einen Druck von weniger als $10^{-4}$ Pa, insbesondere von weniger als $10^{-5}$ Pa, in der Ionenquelle bereitzustellen.

Gegebenenfalls ist vorgesehen, dass eine Beobachtungsvorrichtung zur visuellen Beobachtung des Probenaufnahmebereichs durch das Fenster vorgesehen ist, wobei der Laserstrahl bevorzugt durch ein optisches System der Beobachtungsvorrichtung leitbar ist oder geleitet wird.

Gegebenenfalls ist vorgesehen, dass die Beobachtungsvorrichtung eine Emissions-Analysenvorrichtung umfasst, die dazu eingerichtet ist, bei der Interaktion des Laserstrahls mit einem Feststoff-Probenmaterial erzeugte Emissionsstrahlung zu analysieren. Zu diesem Zweck kann die Beobachtungsvorrichtung beispielsweise eine Emissionsstrahlungs-Sammeleinrichtung und eine spektroskopische Einheit umfassen, wobei letztere dazu eingerichtet ist, die mit der Emissionsstrahlungs-Sammeleinrichtung gesammelte Strahlung zu analysieren.

Gegebenenfalls umfasst das System ferner eine Analysenvorrichtung, die mit der ersten Auslasseinrichtung verbunden ist. Die Analysenvorrichtung kann dazu eingerichtet sein, mittels des Laserstrahls abgetragenes Probenmaterial im Fluidstrom einer chemischen Analyse zu unterziehen. Die Analysenvorrichtung kann beispielsweise eine weitere massenspektrometrische Vorrichtung, aber beispielsweise auch eine emissionsspektroskopische Vorrichtung sein. Bevorzugt umfasst die Analysenvorrichtung ein induktiv gekoppeltes Plasma, in das der aus der ersten Auslasseinrichtung austretende Gasstrom eingebracht werden kann. Die weitere Analyse kann in diesem Fall mittels einer massenspektrometrischen Detektion und/oder mittels einer emissionsspektrometrischen Detektion erfolgen. Gegebenenfalls ist die Analysenvorrichtung für die Ermittlung von Elementinformationen aus dem Feststoff-Probenmaterial geeignet.

Die Erfindung betrifft ferner ein Verfahren zur Analyse eines Feststoff-Probenmaterials mit einer erfindungsgemäßen Vorrichtung. Das Verfahren kann die folgenden Schritte umfassen:

- Platzieren des Probenmaterials im Probenaufnahmebereich,
- Abtragen von Probenmaterial mittels einer Laservorrichtung,
- Transportieren des abgetragenen Probenmaterials mit einem von der Einlasseinrichtung über den Probenaufnahmebereich zur ersten Auslasseinrichtung und zur zweiten Auslasseinrichtung strömenden Fluidstrom, wobei die austretenden Volumenströme des Fluidstroms in einem Verhältnis zwischen 100:1 und 5000:1, insbesondere zwischen 500:1 und 2000:1, zwischen erster Auslasseinrichtung und zweiter Auslasseinrichtung stehen,
- Analysieren des gemeinsam mit dem Fluidstrom aus der zweiten Auslasseinrichtung austretenden abgetragenen Probenmaterials mit einer massenspektrometrischen Vorrichtung, die dazu eingerichtet ist, das Probenmaterial durch Elektronenstoßionisation in einem Vakuum zu ionisieren.

Gegebenenfalls kann die massenspektrometrische Vorrichtung alternativ oder zusätzlich dazu eingerichtet sein, abgetragenes Probenmaterial durch eine andere geeignete Form der Ionisation in einem Vakuum zu ionisieren.

Gegebenenfalls ist vorgesehen, dass der Volumenstrom des durch die Einlasseinrichtung einströmenden Fluidstroms zwischen 0,5 L/min und 5 L/min, insbesondere zwischen 0,5 L/min und 2 L/min, gegebenenfalls bei einem Druck zwischen 0,5 bar und 2 bar, beträgt.

Gegebenenfalls ist vorgesehen, dass der Volumenstrom des durch die zweite Auslasseinrichtung austretenden Fluidstroms kleiner als 10 mL/min, insbesondere kleiner als 5 mL/min, bevorzugt zwischen 0,25 und 2,5 mL/min, ist.

Weitere Merkmale der vorliegenden Erfindung ergeben sich aus den Patentansprüchen, den Figuren sowie der Beschreibung des Ausführungsbeispiels.

Nachfolgend wird die vorliegende Erfindung anhand von exemplarischen Ausführungsbeispielen im Detail erläutert.

Es zeigen:

Fig. 1 eine schematische perspektivische Ansicht einer erfindungsgemäßen Vorrichtung gemäß einem ersten Ausführungsbeispiel;

Fig. 2 eine schematische Ansicht eines Systems, das eine erfindungsgemäße Vorrichtung gemäß dem ersten Ausführungsbeispiel umfasst;

Fig. 3 ein exemplarisches Massenspektrum von Polymethylmethacrylat; und

Fig. 4 ein exemplarisches Massenspektrum von Polystyrol.

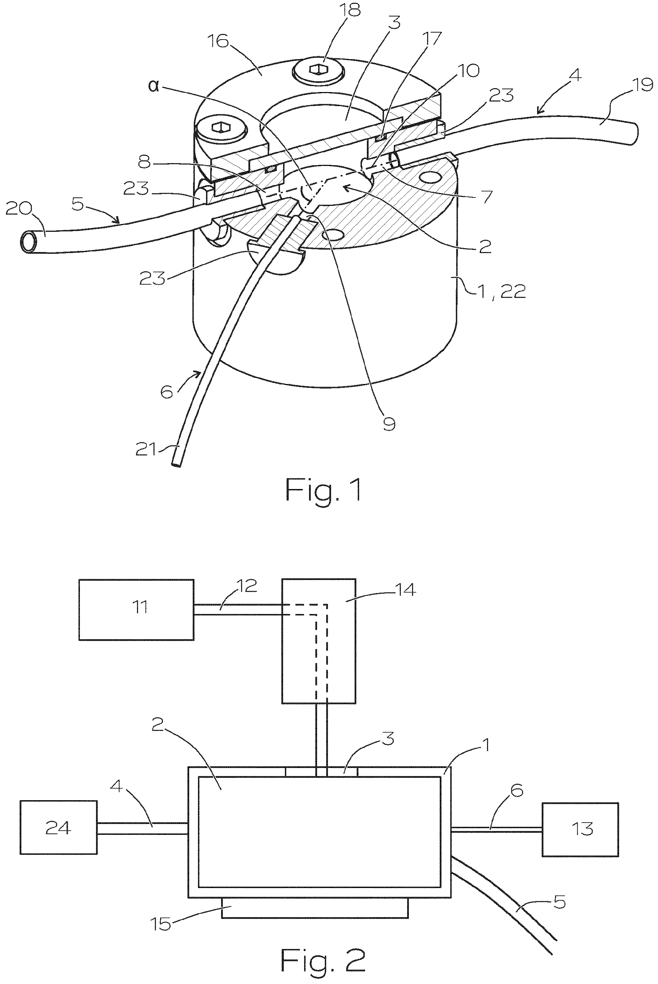

Fig. 1 eine schematische perspektivische Ansicht einer erfindungsgemäßen Vorrichtung gemäß einem ersten Ausführungsbeispiel. Die Vorrichtung umfasst ein Gehäuse 1 mit einem darin angeordneten Probenaufnahmebereich, der in diesem Beispiel in der Aufsicht kreisförmig ist. Das Gehäuse 1 ist durch eine Abdeckung 16 und ein Gehäuseunterteil 22 gebildet, wobei die Abdeckung 16 über Schrauben 18 mit dem Gehäuseunterteil 22 verbunden ist. Die Abdeckung 16 umfasst ein Fenster 3, das für Laserstrahlung durchlässig ist. In diesem Ausführungsbeispiel ist das Fenster aus Quarzglas gebildet.

Das Gehäuse weist drei Öffnungen auf, wobei eine Einlassöffnung 7, eine erste Auslassöffnung 8 sowie eine zweite Auslassöffnung 9 vorgesehen sind. Abgesehen von den drei Öffnungen ist das Gehäuse 1 gegen die Umgebung gasdicht ausgebildet. Zur Abdichtung ist zwischen Fenster 3 und Gehäuseunterteil 22 eine ringförmige Dichtung 17 vorgesehen.

An der Einlassöffnung 7 ist eine Einlasseinrichtung 4 angeordnet, die ein Anschlussstück 23 und einen Einlassschlauch 19 umfasst. An der ersten Auslassöffnung 8 ist eine erste Auslasseinrichtung 5 angeordnet, die ein Anschlussstück 23 und einen ersten Auslassschlauch 20 umfasst. An der zweiten Auslassöffnung 9 ist eine zweite Auslasseinrichtung 9 angeordnet, die ein Anschlussstück 23 und einen zweiten Auslassschlauch 21 umfasst.

Die Einlassöffnung 7 und die erste Auslassöffnung 8 sind einander gegenüberliegend angeordnet. Dies bedeutet, dass die beiden Öffnungen 7, 8 entlang der Hauptströmungsrichtung 10 des Gasstroms angeordnet sind. Die zweite Auslassöffnung 9 ist seitlich versetzt zur ersten Auslassöffnung 8 angeordnet, wobei der Winkel $\alpha$ in Bezug auf die Hauptströmungsrichtung 10 in diesem Beispiel etwa 30° beträgt.

Wenn über die Einlasseinrichtung 4 ein Gasstrom in den Probenaufnahmebereich 2 geleitet wird, kann dieser nur über die beiden Auslasseinrichtungen 5, 6 wieder vom Probenaufnahmebereich 2 ausströmen. Die Auslasseinrichtungen 5, 6 sind derart ausgebildet, dass der Volumenstrom, der über die erste Auslasseinrichtung 5 und die zweite Auslasseinrichtung 6 ausströmt in einem Verhältnis von etwa 1000 zu 1 steht. Dies bedeutet, dass bei Einleitung eines Volumenstroms von etwa 1000 mL/min über die Einlasseinrichtung 4 etwa 1 mL/min aus der zweiten Auslasseinrichtung 6 austreten. Der restliche Gasstrom tritt über die erste Auslasseinrichtung 5 aus.

Im vorliegenden Ausführungsbeispiel wird diese Teilung der Volumenströme durch entsprechende Wahl von Länge und Strömungsquerschnitt der Auslasseinrichtungen 5, 6 bestimmt. Die Länge der Auslasseinrichtungen 5, 6 ist jene Distanz, die ein Gas zwischen dem Beginn und dem Ende der jeweiligen Auslasseinrichtung 5, 6 zurücklegt.

Die erste Auslasseinrichtung 5 weist dabei eine Länge $L_1$ von etwa 100 cm und einen Strömungsquerschnitt $Q_1$ von etwa 7 mm$^2$ auf. Die zweite Auslasseinrichtung 6 weist eine Länge $L_2$ von etwa 220 cm und einen Strömungsquerschnitt $Q_2$ von etwa 0,008 mm$^2$ auf. Bei ausreichend groß dimensioniertem Durchmesser der ersten Auslasseinrichtung 5 wird der Volumenstrom in der zweiten Auslassrichtung 6 im Wesentlichen nur von der Länge ($L_2$) und der Querschnittsfläche ($Q_2$) dieser zweiten Auslasseinrichtung 6 bestimmt. Über die Regelung über die Einlasseinrichtung 4 des zum Probenaufnahmebereich 2 zugeführten Volumenstroms $V_0$ lässt sich das Teilungsverhältnis über einen weiten Bereich (etwa 1:100 - 1:5000) regeln.

Entsprechend den jeweiligen Anforderungen kann dieses Verhältnis in gewissen Schranken variiert werden. Wird beispielsweise die Länge $L_2$ verringert, wirkt sich dies direkt proportional auf $Q_2$ aus, wodurch das Verhältnis und somit auch der aus der zweiten Auslasseinrichtung 6 austretende Volumenstrom größer wird.

Fig. 2 zeigt eine schematische Ansicht eines Systems, das die erfindungsgemäße Vorrichtung gemäß dem ersten Ausführungsbeispiel umfasst. Zusätzlich umfasst das System eine Laservorrichtung 11 und eine massenspektrometrische Vorrichtung 13.

Die Einlasseinrichtung 4 ist mit einem Gasbehälter 24 verbunden, um Gas in den Probenaufnahmebereich 2 einleiten zu können.

Die Laservorrichtung 11 umfasst in diesem Ausführungsbeispiel einen gepulsten Nanosekunden-Feststofflaser. Die Laservorrichtung 11 erzeugt einen Laserstrahl 12 mit einer Wellenlänge von 266 nm. Der Laserstrahl 12 wird durch das Fenster 3, das aus Quarzglas gebildet ist, in den Probenaufnahmebereich 2 geleitet. Die optische Manipulation des Laserstrahls 12 erfolgt in der Beobachtungsvorrichtung 14, die auch ein Mikroskopsystem zur Beobachtung des Probenaufnahmebereichs 2 umfasst. Durch diese Anordnung kann immer jener Abschnitt des Probenaufnahmebereichs 2 beobachtet werden, auf den der Laserstrahl 12 gerichtet ist.

Durch das optische System der Beobachtungsvorrichtung 14 kann der Querschnitt des Laserstrahls 12 im Probenaufnahmebereich 2 bzw. an der Oberfläche des Feststoff-Probenmaterials (nicht dargestellt) eingestellt werden. In diesem Ausführungsbeispiel ist der Querschnitt zwischen 10 $\mu$m und 200 $\mu$m variabel einstellbar.

Das Gehäuse 1 der erfindungsgemäßen Vorrichtung ist in diesem System auf einer Bewegungseinrichtung 15 angeordnet, die als motorisierte Bühne ausgebildet ist und das Gehäuse 1 in drei Raumrichtungen translatorisch verfahren kann. Dadurch kann die relative Position zwischen Feststoff-Probenmaterial und Laserstrahl 12 eingestellt werden.

Die erste Auslasseinrichtung 5 mündet in dem hier dargestellten System in einen Abzug (nicht dargestellt), wo das austretende Gas einer Reinigung und Entsorgung zugeführt wird. Das Gas, das auch der ersten Auslasseinrichtung 5 entweicht wird somit nicht weiterverwendet. In einem Beispiel könnte jedoch auch jenes Gas einer weiteren Analyse zugeführt werden. Etwa könnte das Ende der ersten Auslasseinrichtung 5 mit einer weiteren massenspektrometrischen Einrichtung verbunden sein, wie beispielsweise mit einer ICP-MS-Vorrichtung. Das Ende der ersten Auslasseinrichtung 5 könnte alternativ mit einer anderen Analysenvorrichtung verbunden sein, beispielsweise mit einer emissionsspektroskopischen Vorrichtung, wie einer ICP-OES-Vorrichtung. Durch Verbindung der ersten Auslasseinrichtung 5 mit einer weiteren Analysenvorrichtung kann beispielsweise auch Information über die Elementzusammensetzung des Feststoff- Probenmaterials gewonnen werden.

Die zweite Auslasseinrichtung 6 mündet ein die massenspektrometrische Vorrichtung 13, die als Vorrichtung mit Elektronenstoßionisation unter Vakuumbedingungen ausgebildet ist. Die massenspektrometrische Vorrichtung 13 umfasst eine Ionisationskammer, an die das Ende der zweiten Auslasseinrichtung 6 angeschlossen ist und in welche der austretendet Gasstrom einströmt. Die Merkmale einer derartigen Vorrichtung sind in der Fachwelt wohlbekannt und werden an dieser Stelle nicht im Detail erläutert. Die massenspektrometrische Vorrichtung 13 kann alternativ oder zusätzlich zur Elektronenstoßionisation eine andere geeignete Ionisationsform aufweisen.

Die Analyse eines Feststoff-Probenmaterials mit einem System aus Fig. 2 kann wie folgt durchgeführt werden: Das Feststoff-Probenmaterial wird im Probenaufnahmebereich 2 der Vorrichtung platziert, das Gehäuse 1 wird verschlossen und mit Gas aus dem Gasbehälter 24, das über die Einlasseinrichtung 4 mit etwa 1000 mL/min in den Probenaufnahmebereich 2 einströmt durchspült. Durch die beschriebene Teilung der Volumenströme tritt etwa 1 mL/min dieses Gasstroms aus der zweiten Auslasseinrichtung 6 und strömt in die massenspektrometrische Vorrichtung 13. Der Rest des Gasstroms tritt durch die erste Auslasseinrichtung 5 aus.

Nun wird über die Beobachtungsvorrichtung 14 eine zur Analyse vorgesehene Position auf der Oberfläche des Feststoff-Probenmaterials ausgewählt und der Laserstrahl 12 auf diese Position fokussiert; die gewählte Position wird mit dem Laserstrahl 12 bestrahlt. Durch die eingebrachte Energie kommt es zu einer Ablation von Probenmaterial, was bedeutet, dass Feststoff-Probenmaterial in Form von Partikeln und gasförmigen Produkten in den Gasraum überführt wird. Die lokal an der Position des Laserabtrags erzeugte Ablationswolke wird durch den Gasstrom zu den Auslasseinrichtungen 5, 6 transportiert und ein Anteil des abgetragenen Probenmaterials gelangt durch die zweite Auslasseinrichtung 6 zur massenspektrometrischen Vorrichtung 13, wo die Analyse des Feststoff-Probenmaterials, genauer gesagt des Aerosols des Feststoff-Probenmaterials, erfolgt.

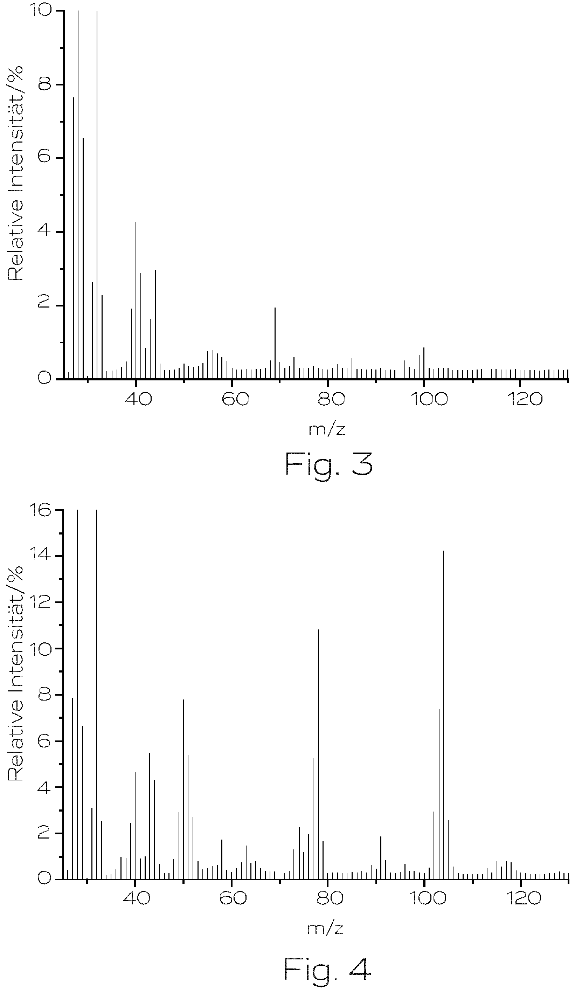

Mit dem System aus Fig. 2 erhaltene Massenspektren sind exemplarisch in den Fig. 3 und 4 gezeigt. In den in Fig. 3 und 4 gezeigten Diagrammen sind auf der X-Achse m/z-Werte aufgetragen, während die Y-Achse relative Intensitätswerte zeigt. m/z-Werte bezeichnen das Masse-zu-Ladungs-Verhältnis detektierter Ionen.

Fig. 3 zeigt ein Massenspektrum, das bei der Analyse von Polymethylmethacrylat als Feststoff-Probenmaterial erhalten wurde. Durch die Elektronenstoßionisation in der massenspektrometrischen Vorrichtung 13 werden Fragmentionen erzeugt, die für das analysierte Probenmaterial charakteristisch sind. Beispielhafte charakteristische Fragmentionen in Fig. 3 weisen die m/z-Werte 41, 55, 69 und 100 auf.

Fig. 4 zeigt ein Massenspektrum, das bei der Analyse von Polystyrol als Feststoff-Probenmaterial erhalten wurde. Durch die Elektronenstoßionisation in der massenspektrometrischen Vorrichtung 13 werden Fragmentionen erzeugt, die für das analysierte Probenmaterial charakteristisch sind. Beispielhafte charakteristische Fragmentionen in Fig. 4 weisen die m/z-Werte 51, 78, 91 und 102, 104 und 117 auf.

Die charakteristischen Fragmentionen können beispielsweise zur Identifizierung des Feststoff-Probenmaterials verwendet werden, etwa durch Abgleich mit Referenztabellen oder Datenbanken.

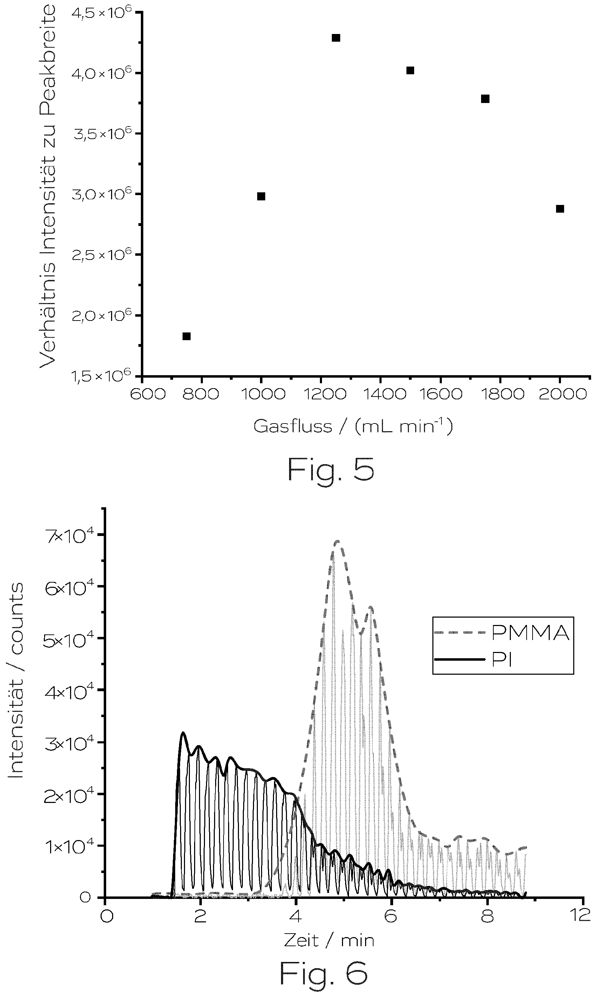

Im Rahmen der vorliegenden Erfindung wurden am System von Fig. 2 auch Variationen hinsichtlich des durch die Einlasseinrichtung 4 einströmenden Gasflusses vorgenommen. Fig. 5 zeigt das Verhältnis zwischen Intensität des Totalionenstroms (TIC) bei Ablation einer Poylmethylmethacrylat-Probe und der Breite des erhaltenen Peaks. Die Intensität ist ein wichtiger Parameter in Hinblick auf die Sensitivität der Analyse, während die Peakbreite das Auswaschverhalten der Vorrichtung widerspiegelt. Aus Fig. 5 ist ersichtlich, dass das Verhältnis bei etwa 1200 mL/min ein Maximum aufweist. Dies bedeutet, dass die Vorrichtung bei diesem Gasfluss die größte Leistungsfähigkeit aufweist.

Ferner wurde eine zweischichtige Probe mit einer oberen Schicht aus Polyimid und einer unteren Schicht aus Polymethylmethacrylat mit dem System aus Fig. 2 analysiert. Der Auftreffpunkt des Laserstrahls 12 bzw. des Laserpatterns wurde während dieser Analyse nicht verändert, wodurch ein Tiefenprofil des Probenmaterials erhalten werden konnte. Die Verläufe der Intensitäten der Peaks bei den m/z-Werten 51, 74 und 98 (repräsentativ für Polyimid) und 41, 69 und 100 (repräsentativ für Polymethylmethacrylat) sind in Fig. 6 dargestellt. Es ist deutlich erkennbar, dass das Polyimid- Signal mit zunehmender Anzahl der Laserschüsse abnimmt, während das Polymethylmethacrylat zunimmt, womit der geschichtete Probenaufbau wiedergegeben wird.

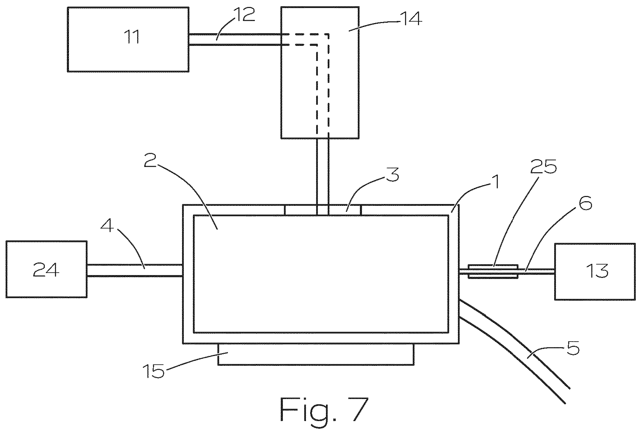

Fig. 7 zeigt eine weitere Ausführungsform eines erfindungsgemäßen Systems. Das in Fig. 7 dargestellte System stimmt weitgehend mit jenem überein, das bereits in Fig. 2 gezeigt ist. Im Unterschied zu dem System aus Fig. 2 weist das System aus Fig. 7 an der zweiten Auslasseinrichtung 6 eine Heizeinrichtung 25 auf, die als Heizmantel ausgebildet ist, der die zweite Auslasseinrichtung 6 umgibt. Durch den Einsatz der Heizeinrichtung 25 kann die Peakform der massenspektrometrischen Signale verbessert werden.

Da das System aus Fig. 7 in den weiteren technischen Merkmalen mit dem System aus Fig. 2 übereinstimmt, wird im Übrigen auf die Beschreibung dieser Figur verwiesen.

**Bezugzeichenliste**

| | |
|---|---|
| 1 | Gehäuse |
| 2 | Probenaufnahmebereich |
| 3 | Fenster |
| 4 | Einlasseinrichtung |
| 5 | erste Auslasseinrichtung |
| 6 | zweite Auslasseinrichtung |
| 7 | Einlassöffnung |
| 8 | erste Auslassöffnung |
| 9 | zweite Auslassöffnung |
| 10 | Hauptströmungsrichtung |
| 11 | Laservorrichtung |
| 12 | Laserstrahl |
| 13 | massenspektrometrische Vorrichtung |
| 14 | Beobachtungsvorrichtung |
| 15 | Bewegungseinrichtung |
| 16 | Abdeckung |
| 17 | Dichtung |
| 18 | Befestigungsschraube |
| 19 | Einlassschlauch |
| 20 | erster Auslassschlauch |
| 21 | zweiter Auslassschlauch |
| 22 | Gehäuseunterteil |
| 23 | Anschlussstück |
| 24 | Gasbehälter |
| 25 | Heizeinrichtung |

**Patentansprüche**

1.   **Vorrichtung** zur Aufnahme sowie zur orts- und tiefenaufgelösten Analyse eines Feststoff-Probenmaterials, insbesondere für laserbasierte chemische Analyse, umfassend ein im Wesentlichen gasdicht abgeschlossenes Gehäuse (1) mit einem innerhalb des Gehäuses (1) angeordneten Probenaufnahmebereich (2), wobei das Gehäuse (1) ein für einen Laserstrahl durchlässiges Fenster (3) umfasst, wobei die Vorrichtung eine Einlasseinrichtung (4) zum Einleiten eines Fluidstroms zum Probenaufnahmebereich (2) sowie eine erste Auslasseinrichtung (5) und eine zweite Auslasseinrichtung (6) zum Ableiten des mit abgetragenem Probenmaterial beaufschlagten Fluidstroms vom Probenaufnahmebereich (2) aufweist, **dadurch gekennzeichnet, dass** die Auslasseinrichtungen (5, 6) derart ausgebildet sind, dass die austretenden Volumenströme des Fluidstroms in einem Verhältnis zwischen 100:1 und 5000:1, insbesondere zwischen 500:1 und 2000:1, zwischen erster Auslasseinrichtung (5) und zweiter Auslasseinrichtung (6) stehen.

2.   Vorrichtung nach Anspruch 1, **dadurch gekennzeichnet, dass** die Einlasseinrichtung (4) dazu eingerichtet ist, einen Fluidstrom, insbesondere ein Gas, vorzugsweise Helium, mit einer Flussrate zwischen 0,5 L/min und 5 L/min, insbesondere zwischen 0,5 L/min und 2 L/min, einzuleiten.

3.   Vorrichtung nach Anspruch 1 oder 2, **dadurch gekennzeichnet, dass** das Gehäuse (1) eine Einlassöffnung (7) aufweist, mit der die Einlasseinrichtung (4) verbunden ist, dass das Gehäuse (1) eine erste Auslassöffnung (8) aufweist, mit der die erste Auslasseinrichtung (5) verbunden ist, und dass das Gehäuse (1) eine zweite Auslassöffnung (9) aufweist, mit der die zweite Auslasseinrichtung (6) verbunden ist.

4. Vorrichtung nach Anspruch 3, **dadurch gekennzeichnet, dass** zwischen Einlassöffnung (7) und erster Auslassöffnung (8) eine Hauptströmungsrichtung (10) des Fluidstroms verläuft, und dass die zweite Auslassöffnung (9) in einem Winkel $\alpha$ zwischen 10° und 90°, insbesondere zwischen 30° und 60°, in Bezug auf die Hauptströmungsrichtung (10) angeordnet ist.

5. Vorrichtung nach einem der Ansprüche 1 bis 4, **dadurch gekennzeichnet, dass** der Probenaufnahmebereich (2) kreisförmig oder tropfenförmig ausgebildet ist.

6. Vorrichtung nach einem der Ansprüche 1 bis 5, **dadurch gekennzeichnet, dass** die erste Auslasseinrichtung (5) eine Länge $L_1$ und einem Strömungsquerschnitt $Q_1$ aufweist, wobei Länge $L_1$ und einem Strömungsquerschnitt $Q_1$ derart gewählt sind, dass die erste Auslasseinrichtung (5) im Wesentlichen keinen Druckabfall aufweist, und dass die zweite Auslasseinrichtung (6) eine Länge $L_2$ und einen Strömungsquerschnitt $Q_2$ aufweist, wobei der Strömungsquerschnitt $Q_2$ gegebenenfalls zwischen 0,003 und 0,12 mm$^2$ beträgt.

7. Vorrichtung nach einem der Ansprüche 1 bis 6, **dadurch gekennzeichnet, dass** das Gehäuse (1) auf einer Bewegungseinrichtung (15) angeordnet ist, die dazu eingerichtet ist, das Gehäuse (1) translatorisch, insbesondere in drei zueinander im Wesentlichen orthogonal angeordnete Richtungen, zu verfahren.

8. Vorrichtung nach einem der Ansprüche 1 bis 7, **dadurch gekennzeichnet, dass** die zweite Auslasseinrichtung (6) eine Heizeinrichtung (25) umfasst, die dazu eingerichtet ist, die zweite Auslasseinrichtung (6) zumindest abschnittsweise zu erhitzen, wobei gegebenenfalls die Heizeinrichtung (25) dazu eingerichtet ist, die zweite Auslasseinrichtung (6) zumindest abschnittsweise auf eine Temperatur von wenigstens 70°C zu erhitzen.

9. **System** umfassend eine Vorrichtung nach einem der Ansprüche 1 bis 8 sowie eine Laservorrichtung (11), wobei die Laservorrichtung (11) dazu eingerichtet ist, einen Laserstrahl (12) auf ein im Probenaufnahmebereich (2) angeordnetes Feststoff-Probenmaterial abzugeben.

10. System nach Anspruch 9, **dadurch gekennzeichnet, dass** das Fenster (3) für die Wellenlänge des Laserstrahls (12) einen Transmissionsgrad von zumindest 80%, bevorzugt zumindest 90%, aufweist.

11. System nach Anspruch 9 oder 10, **dadurch gekennzeichnet, dass** die Laservorrichtung (11) dazu eingerichtet ist, einen gepulsten monochromatischen Laserstrahl (12) mit einer Wellenlänge von weniger als 300 nm abzugeben, und/oder dass die Laservorrichtung (11) dazu eingerichtet ist, einen fokussierten Laserstrahl (12) mit einem minimalen Strahldurchmesser von kleiner als 500 $\mu$m, insbesondere von kleiner als 200 $\mu$m, abzugeben.

12. System nach einem der Ansprüche 9 bis 11, ferner umfassend

- eine massenspektrometrische Vorrichtung (13), wobei die massenspektrometrische Vorrichtung (13) dazu eingerichtet ist, mittels des Laserstrahls (12) abgetragenes Probenmaterial im Fluidstrom durch Elektronenstoßionisation und/oder durch eine andere Form der Ionisation in einem Vakuum zu ionisieren, wobei die massenspektrometrische Vorrichtung (13) zur Aufnahme des Fluidstroms mit der zweiten Auslasseinrichtung (6) verbunden ist
und/oder
- eine Analysenvorrichtung, wobei die Analysenvorrichtung dazu eingerichtet ist, mittels des Laserstrahls (12) abgetragenes Probenmaterial im Fluidstrom einer chemischen Analyse zu unterziehen, wobei die Analysenvorrichtung zur Aufnahme des Fluidstroms mit der ersten Auslasseinrichtung (5) verbunden ist.

13. System nach einem der Ansprüche 9 bis 12, **dadurch gekennzeichnet, dass** eine Beobachtungsvorrichtung (14) zur visuellen Beobachtung des Probenaufnahmebereichs (2) durch das Fenster (3) vorgesehen ist, wobei der Laserstrahl (12) bevorzugt durch ein optisches System der Beobachtungsvorrichtung (14) leitbar ist oder geleitet wird, wobei die Beobachtungsvorrichtung (14) gegebenenfalls eine Emissions-Analysenvorrichtung umfasst, die dazu eingerichtet ist, bei der Interaktion des Laserstrahls (12) mit einem Feststoff-Probenmaterial erzeugte Emissionsstrahlung zu analysieren.

14. **Verfahren** zur orts- und tiefenaufgelösten Analyse eines Feststoff-Probenmaterials mit einer Vorrichtung nach einem der Ansprüche 1 bis 8, umfassend die folgenden Schritte:

- Platzieren des Probenmaterials im Probenaufnahmebereich (2),
- Abtragen von Probenmaterial mittels einer Laservorrichtung (11),
- Transportieren des abgetragenen Probenmaterials mit einem von der Einlasseinrichtung (4) über den Probenaufnahmebereich (2) zur ersten Auslasseinrichtung (5) und zur zweiten Auslasseinrichtung (6) strömenden Fluidstrom, wobei die austretenden Volumenströme des Fluidstroms in einem Verhältnis zwischen 100:1 und 5000:1, insbesondere zwischen 500:1 und 2000:1, zwischen erster Auslasseinrichtung (5) und zweiter Auslasseinrichtung (6) stehen,
- Analysieren des gemeinsam mit dem Fluidstrom aus der zweiten Auslasseinrichtung (6) austretenden abgetragenen Probenmaterials mit einer massenspektrometrischen Vorrichtung (13), die dazu eingerichtet ist, das Probenmaterial durch Elektronenstoßionisation und/oder durch eine andere Form der Ionisation in einem Vakuum zu ionisieren.

**15.** Verfahren nach Anspruch 14, **dadurch gekennzeichnet, dass** der Volumenstrom des durch die Einlasseinrichtung (4) einströmenden Fluidstroms zwischen 0,5 L/min und 5 L/min, insbesondere zwischen 0,5 L/min und 2 L/min, bei einem Druck zwischen 0,5 bar und 2 bar beträgt, und/oder dass der Volumenstrom des durch die zweite Auslasseinrichtung (6) austretenden Fluidstroms kleiner als 10 mL/min ist.

**Claims**

**1.** **An apparatus** for accommodating and for analysing a solid sample material in a spatially and depth-resolved manner, in particular for laser-based chemical analysis, comprising a substantially gas-tight sealed housing (1) with a sample-accommodating region (2) arranged inside the housing (1), wherein the housing (1) comprises a window (3) that is transparent to a laser beam, wherein the apparatus has an inlet device (4) for introducing a fluid flow into the sample-accommodating region (2) and a first outlet device (5) and a second outlet device (6) for discharging the fluid flow loaded with ablated sample material from the sample-accommodating region **(2),characterised in that** the outlet devices (5, 6) are formed in such a way that the ratio between the volume flows of the fluid flow exiting from the first outlet device (5) and of the fluid flow exiting from the second outlet device (6) is between 100:1 and 5000:1, in particular between 500:1 and 2000:1.

**2.** The apparatus according to claim 1, **characterised in that** the inlet device (4) is configured to introduce a fluid flow, in particular a gas, preferably helium, at a flow rate of between 0.5 L/min and 5 L/min, in particular between 0.5 L/min and 2 L/min.

**3.** The apparatus according to claim 1 or 2, **characterised in that** the housing (1) has an inlet opening (7) to which the inlet device (4) is connected, **in that** the housing (1) has a first outlet opening (8) to which the first outlet device (5) is connected, and **in that** the housing (1) has a second outlet opening (9) to which the second outlet device (6) is connected.

**4.** The apparatus according to claim 3, **characterised in that** a main flow direction (10) of the fluid flow runs between the inlet opening (7) and the first outlet opening (8), and **in that** the second outlet opening (9) is arranged at an angle $\alpha$ between 10 ° and 90 °, in particular between 30 ° and 60 °, in relation to the main flow direction (10).

**5.** The apparatus according to any one of claims 1 to 4, **characterised in that** the sample-accommodating region (2) is circular or drop-shaped.

**6.** The apparatus according to any one of claims 1 to 5, **characterised in that** the first outlet device (5) has a length $L_1$ and a flow cross-section $Q_1$, wherein the length $L_1$ and a flow cross-section $Q_1$ are selected such that the first outlet device (5) has substantially no pressure drop, and **in that** the second outlet device (6) has a length $L_2$ and a flow cross-section $Q_2$ wherein optionally the flow cross-section $Q_2$ is between 0.003 and 0.12 mm$^2$.

**7.** The apparatus according to any one of claims 1 to 6, **characterised in that** the housing (1) is arranged on a movement device (15) which is configured to translationally move the housing (1), in particular in three directions which are substantially orthogonal to one another.

**8.** The apparatus according to any one of claims 1 to 7, **characterised in that** the second outlet device (6) comprises a heating device (25) which is configured to heat the second outlet device (6) at least sectionally, wherein the heating device (25) is optionally configured to heat the second outlet device (6) at least sectionally to a temperature of at least 70 °C.

9.  **A system** comprising an apparatus according to any one of claims 1 to 8 and a laser apparatus (11), wherein the laser apparatus (11) is configured to emit a laser beam (12) onto a solid sample material placed in the sample-accommodating region (2).

10. The system according to claim 9, **characterised in that** the window (3) has a transmittance of at least 80%, preferably at least 90%, for the wavelength of the laser beam (12).

11. The system according to claim 9 or 10, **characterised in that** the laser apparatus (11) is configured to emit a pulsed monochromatic laser beam (12) with a wavelength of less than 300 nm, and/or **in that** the laser apparatus (11) is configured to emit a focused laser beam (12) with a minimum beam diameter of less than 500 $\mu$m, in particular less than 200 $\mu$m.

12. The system according to any one of claims 9 to 11, further comprising

- a mass spectrometric apparatus (13), wherein the mass spectrometric apparatus (13) is configured to ionise sample material in the fluid flow ablated by means of the laser beam (12) by electron impact ionisation and/or by another form of ionisation in a vacuum, wherein the mass spectrometric apparatus (13) is connected to the second outlet device (6) for accommodating the fluid flow.
and/or
- an analysis apparatus, wherein the analysis apparatus is configured to chemically analyse the sample material in the fluid flow ablated by the laser beam (12), wherein the analysis apparatus is connected to the first outlet device (5) for accommodating the fluid flow.

13. The system according to any one of claims 9 to 12, **characterised in that** an observation apparatus (14) is provided for visual observation of the sample-accommodating region (2) through the window (3), wherein the laser beam (12) is preferably guidable or is guided through an optical system of the observation apparatus (14), wherein the observation apparatus (14) optionally comprises an emission analysis apparatus configured to analyse emission radiation generated upon interaction of the laser beam (12) with a solid sample material.

14. **A method** for spatially and depth-resolved analysis of a solid sample material with an apparatus according to any one of claims 1 to 8, comprising the following steps:

- Placing the sample material in the sample-accommodating region (2),
- Ablating the sample material by means of a laser apparatus (11),
- Transporting the ablated sample material with a fluid flow flowing from the inlet device (4) via the sample-accommodating region (2) to the first outlet device (5) and to the second outlet device (6), wherein the exiting volume flows of the fluid flow are in a ratio of between 100:1 and 5000:1, in particular between 500:1 and 2000:1, between the first outlet device (5) and the second outlet device (6),
- Analysing the ablated sample material exiting together with the fluid flow from the second outlet device (6) with a mass spectrometric apparatus (13) which is configured to ionise the sample material by electron impact ionisation and/or by another form of ionisation in a vacuum.

15. The method according to claim 14, **characterised in that** the volume flow of the fluid flow flowing in through the inlet device (4) is between 0.5 L/min and 5 L/min, in particular between 0.5 L/min and 2 L/min, at a pressure of between 0.5 bar and 2 bar, and/or **in that** the volume flow of the fluid flow exiting through the second outlet device (6) is less than 10 mL/min.

## Revendications

1.  **Dispositif** destiné à recevoir et à analyser, avec une résolution spatiale et en profondeur, un échantillon de matière solide, en particulier pour une analyse chimique par laser, comprenant un boîtier (1) fermé de manière sensiblement étanche aux gaz, avec une zone de réception d'échantillon (2) disposée à l'intérieur du boîtier (1), le boîtier (1) comprenant une fenêtre (3) perméable à un faisceau laser, le dispositif présentant un dispositif d'entrée (4) pour introduire un flux de fluide dans la zone de réception d'échantillon (2) ainsi qu'un premier dispositif de sortie (5) et un deuxième dispositif de sortie (6) pour évacuer le flux de fluide chargé de matériau d'échantillon prélevé de la zone de réception d'échantillon (2), **caractérisé en ce que** les dispositifs de sortie (5, 6) sont configurés de telle sorte que les débits volumiques sortants du flux de fluide se situent dans un rapport compris entre 100:1 et 5000:1, en particulier entre 500:1 et 2000:1, entre le premier dispositif de sortie (5) et le deuxième dispositif de sortie (6).

2. Dispositif selon la revendication 1, **caractérisé en ce que** le dispositif d'entrée (4) est conçu pour introduire un flux de fluide, en particulier un gaz, de préférence de l'hélium, avec un débit compris entre 0,5 l/min et 5 l/min, en particulier entre 0,5 l/min et 2 l/min.

3. Dispositif selon la revendication 1 ou 2, **caractérisé en ce que** le boîtier (1) présente une ouverture d'entrée (7) à laquelle est raccordé le dispositif d'entrée (4), **en ce que** le boîtier (1) présente une première ouverture de sortie (8) à laquelle est raccordé le premier dispositif de sortie (5), et **en ce que** le boîtier (1) présente une deuxième ouverture de sortie (9) à laquelle est raccordé le deuxième dispositif de sortie (6).

4. Dispositif selon la revendication 3, **caractérisé en ce qu'**une direction d'écoulement principale (10) du flux de fluide s'étend entre l'ouverture d'entrée (7) et la première ouverture de sortie (8), et **en ce que** la deuxième ouverture de sortie (9) est disposée selon un angle $\alpha$ compris entre 10° et 90°, en particulier entre 30° et 60°, par rapport à la direction d'écoulement principale (10).

5. Dispositif selon l'une des revendications 1 à 4, **caractérisé en ce que** la zone de réception d'échantillon (2) est configurée sous forme circulaire ou en forme de goutte.

6. Dispositif selon l'une des revendications 1 à 5, **caractérisé en ce que** le premier dispositif de sortie (5) présente une longueur $L_1$ et une section transversale d'écoulement $Q_1$, la longueur $L_1$ et la section transversale d'écoulement $Q_1$ étant choisies de telle sorte que le premier dispositif de sortie (5) ne présente sensiblement aucune chute de pression, et **en ce que** le deuxième dispositif de sortie (6) présente une longueur $L_2$ et une section transversale d'écoulement $Q_2$, la section transversale d'écoulement $Q_2$ étant éventuellement comprise entre 0,003 et 0,12 mm$^2$.

7. Dispositif selon l'une des revendications 1 à 6, **caractérisé en ce que** le boîtier (1) est disposé sur un dispositif de déplacement (15) conçu pour déplacer le boîtier (1) en translation, en particulier dans trois directions sensiblement orthogonales entre elles.

8. Dispositif selon l'une des revendications 1 à 7, **caractérisé en ce que** le deuxième dispositif de sortie (6) comprend un dispositif de chauffage (25) qui est conçu pour chauffer le deuxième dispositif de sortie (6) au moins par sections, le dispositif de chauffage (25) étant éventuellement conçu pour chauffer le deuxième dispositif de sortie (6) au moins par sections à une température d'au moins 70 °C.

9. **Système** comprenant un dispositif selon l'une des revendications 1 à 8 ainsi qu'un dispositif laser (11), le dispositif laser (11) étant conçu pour émettre un faisceau laser (12) sur un échantillon de matière solide disposé dans la zone de réception d'échantillon (2).

10. Système selon la revendication 9, **caractérisé en ce que** la fenêtre (3) présente un coefficient de transmission d'au moins 80 %, de préférence d'au moins 90 %, pour la longueur d'onde du faisceau laser (12).

11. Système selon la revendication 9 ou 10, **caractérisé en ce que** le dispositif laser (11) est conçu pour émettre un faisceau laser monochromatique (12) pulsé d'une longueur d'onde inférieure à 300 nm, et/ou **en ce que** le dispositif laser (11) est conçu pour émettre un faisceau laser (12) focalisé avec un diamètre de faisceau minimal inférieur à 500 $\mu$m, en particulier inférieur à 200 $\mu$m.

12. Système selon l'une des revendications 9 à 11, comprenant en outre

   - un dispositif de spectrométrie de masse (13), le dispositif de spectrométrie de masse (13) étant conçu pour ioniser, dans un vide, le matériau d'échantillon retiré au moyen du faisceau laser (12) dans le flux de fluide par ionisation par impact électronique et/ou par une autre forme d'ionisation, le dispositif de spectrométrie de masse (13) étant raccordé au deuxième dispositif de sortie (6) pour recevoir le flux de fluide
   et/ou
   - un dispositif d'analyse, le dispositif d'analyse étant conçu pour soumettre le matériau d'échantillon retiré au moyen du faisceau laser (12) à une analyse chimique dans le flux de fluide, le dispositif d'analyse étant raccordé au premier dispositif de sortie (5) pour recevoir le flux de fluide.

**13.** Système selon l'une des revendications 9 à 12, **caractérisé en ce qu'**un dispositif d'observation (14) est prévu pour l'observation visuelle de la zone de réception d'échantillon (2) à travers la fenêtre (3), le faisceau laser (12) pouvant de préférence être guidé ou est guidé à travers un système optique du dispositif d'observation (14), le dispositif d'observation (14) comprenant le cas échéant un dispositif d'analyse d'émission qui est conçu pour analyser le rayonnement d'émission généré lors de l'interaction du faisceau laser (12) avec un échantillon de matière solide.

**14.** **Procédé** d'analyse à résolution spatiale et en profondeur d'un échantillon de matière solide à l'aide d'un dispositif selon l'une des revendications 1 à 8, comprenant les étapes suivantes :

- placer le matériau échantillon dans la zone de réception d'échantillon (2),
- ablater le matériau échantillon au moyen d'un dispositif laser (11),
- transporter le matériau échantillon ablaté à l'aide d'un flux de fluide s'écoulant depuis le dispositif d'entrée (4) via la zone de réception d'échantillon (2) vers le premier dispositif de sortie (5) et vers le deuxième dispositif de sortie (6), les débits volumiques sortants du flux de fluide présentant un rapport compris entre 100:1 et 5000:1, en particulier entre 500:1 et 2000:1, entre le premier dispositif de sortie (5) et le deuxième dispositif de sortie (6),
- analyser le matériau de l'échantillon ablaté qui sort avec le flux de fluide du deuxième dispositif de sortie (6) à l'aide d'un dispositif de spectrométrie de masse (13) qui est conçu pour ioniser le matériau de l'échantillon par ionisation par choc électronique et/ou par une autre forme d'ionisation sous vide.

**15.** Procédé selon la revendication 14, **caractérisé en ce que** le débit volumique du flux de fluide entrant par le dispositif d'entrée (4) est compris entre 0,5 l/min et 5 l/min, en particulier entre 0,5 l/min et 2 l/min, à une pression comprise entre 0,5 bar et 2 bar, et/ou **en ce que** le débit volumique du flux de fluide sortant par le deuxième dispositif de sortie (6) est inférieur à 10 ml/min.

Fig. 1

Fig. 2

Fig. 3

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- WO 2014114803 A2
- US 20130162991 A1
- DE 202004005991 U1
- US 5308979 A